(19) Europäisches Patentamt
European Patent Office
Office européen des brevets

(11) **EP 2 511 892 B1**

(12) **EUROPÄISCHE PATENTSCHRIFT**

(45) Veröffentlichungstag und Bekanntmachung des Hinweises auf die Patenterteilung:
**13.03.2013   Patentblatt 2013/11**

(51) Int Cl.:
*G08G 1/123* (2006.01)   *G01C 21/26* (2006.01)
*G01C 21/30* (2006.01)

(21) Anmeldenummer: **11450051.5**

(22) Anmeldetag: **15.04.2011**

(54) **Verfahren zum Detektieren eines Grenzübertritts**

Method for detecting whether a border has been crossed

Procédé de détection d'un passage de frontière

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.10.2012   Patentblatt 2012/42**

(73) Patentinhaber: **Kapsch TrafficCom AG**
**1120 Wien (AT)**

(72) Erfinder: **Weimann, Franz**
**5600 St. Johann im Pongau (AT)**

(74) Vertreter: **Weiser, Andreas**
**Patentanwalt**
**Kopfgasse 7**
**1130 Wien (AT)**

(56) Entgegenhaltungen:
**EP-A1- 1 120 749     DE-A1- 10 155 501**

**Beschreibung**

Die vorliegende Erfindung betrifft ein Verfahren zum Detektieren eines Grenzübertritts eines Objekts, dessen Bewegung durch eine Folge von Positionen auf einer digitalen Straßenkarte mit vektorisierten Straßensegmenten und zumindest einer Grenze repräsentiert wird.

Das Detektieren eines Grenzübertritts auf einer digitalen Straßenkarte ist beispielsweise bei elektronischen Straßenmautsystemen, welche auf globalen Satellitennavigationssystemen (global navigation satellite system, GNSS) wie GPS, GLONASS, Galileo usw. beruhen, von entscheidender Bedeutung. Bei solchen GNSS-Mautsystemen bestimmen fahrzeuggestützte Onboard-Units (OBUs) mittels Satellitennavigation fortlaufend ihre eigenen Positionen ("position fixes"), welche anschließend - sei es dezentral in den OBUs oder zentral in einem Server des Straßenmautsystems - mit Straßensegmenten einer digitalen Straßenkarte abgeglichen werden ("map matching"), um die Benützung einer Straße oder eines Bereichs (z.B. Stadtbereichs) durch ein Fahrzeug zu bestimmen und in der Folge zu vermauten. Zur korrekten Mautbestimmung muss dabei häufig die Ein- und Ausfahrt in ein bzw. aus einem mautpflichtigen Gebiet exakt erkannt werden. Dazu werden virtuelle Grenzen, sogenannte "virtual gantries", auf der digitalen Straßenkarte definiert, deren Überquerungen anhand der fortlaufend ermittelten Positionen eines Fahrzeugs detektiert werden sollen.

Zur Lösung dieser Detektionsaufgabe sind aus den Schriften EP 1 696 208, EP 1 701 322, WO 95/14909, DE 101 55 501, WO 2004/025574, DE 10 2005 016 814 und EP 0 742 890 verschiedenste Verfahren bekannt, welche auf einer Detektion des Eintritts in bestimmte Bereiche ("geofencing"), einer Überprüfung der Abfolge durchfahrener Straßensegmente oder einer kontinuierlichen Abstandsermittlung zu einem definierten Grenzpunkt beruhen. Alle diese bekannten Verfahren haben den Nachteil, dass sie entweder sehr aufwendige Berechnungen erfordern und damit für Echtzeit-Implementierungen auf OBU-Prozessoren mit beschränkter Rechenleistung wenig geeignet sind, oder dass sie bei systemimmanenten Positionsbestimmungs-Ungenauigkeiten keine zuverlässige Aussage über einen erfolgten Grenzübertritt treffen können, beispielsweise wenn ein Fahrer in die Nähe der Grenze kommt, jedoch kurz davor umkehrt.

Die Erfindung setzt sich zum Ziel, ein Verfahren zum Detektieren eines Grenzübertritts eines Objekts auf einer digitalen Straßenkarte zu schaffen, welches einfacher und zuverlässiger ist als die bekannten Verfahren und eine genaue und verlässliche Aussage über einen erfolgten Grenzübertritt liefert. Dieses Ziel wird gemäß der Erfindung mit einem Verfahren der einleitend genannten Art erreicht, welches sich durch die folgenden Schritte auszeichnet:

Bestimmen eines Schnittpunkts der Grenze mit einem Stra-βensegment und einer Referenzrichtung in der Orientierung dieses Straßensegments, fortlaufendes Projizieren von Vektoren, die jeweils zwischen einer der Positionen und dem Schnittpunkt bestimmt werden, auf die Referenzrichtung, um eine Folge von Projektionen zu erhalten, und Detektieren eines Grenzübertritts, wenn in der Folge von Projektionen ein Richtungs- oder Vorzeichenwechsel eintritt.

Mit Hilfe des erfindungsgemäßen Verfahrens kann ein Grenzübertritt mit einfachen Mitteln sicher und zuverlässig erkannt werden. Detektionsfehler, wie sie beispielsweise beim Umkehren kurz vor der Grenze auftreten könnten, können dabei sicher ausgeschlossen werden.

Die Projektionen der Positionsvektoren auf die Referenzrichtung können auf unterschiedliche Art und Weise bestimmt werden. Gemäß einer ersten Ausführungsform der Erfindung erfolgt das Projizieren durch Bilden von vektoriellen Inprodukten der Vektoren mit der Referenzrichtung, und ein Grenzübertritt wird bei einem Vorzeichenwechsel der Inprodukte detektiert. In einer alternativen Ausführungsform der Erfindung erfolgt das Projizieren durch Transformieren der Vektoren in ein lokales Koordinatensystem mit der Referenzrichtung als x-Achse, und ein Grenzübertritt wird bei einem Vorzeichenwechsel ihrer x- Koordinaten detektiert. Beide Varianten können mit verhältnismäßig geringer Rechenleistung berechnet werden und eignen sich daher auch für Echtzeit-Implementierungen sowohl in dezentralen "map matching"-OBUs ("thick-clients") als auch in zentralen "map matching"-Servern eines Straßenmautsystems.

Eine bevorzugte Ausführungsform der Erfindung zeichnet sich durch den weiteren Schritt des Validierens des Grenzübertritts aus, wenn die Beträge der beiden vor und nach dem Richtungs- bzw. Vorzeichenwechsel liegenden Projektionen ein vorgegebenes Minimum überschreiten. Dadurch können Ungenauigkeiten der Positionsbestimmungen berücksichtigt und eine besonders zuverlässige Erkennung des Passierens der virtuellen Grenze erreicht werden.

Eine weitere bevorzugte Variante des Verfahrens der Erfindung umfasst den zusätzlichen Schritt des Validierens des Grenzübertritts, wenn die Normalabstände der beiden vor und nach dem Richtungs- bzw. Vorzeichenwechsel liegenden Positionen zur Referenzrichtung ein vorgegebenes Maximum nicht überschreiten. Mit dieser zusätzlichen Überprüfung kann eine Fehldetektion bei Befahrung von naheliegenden parallelen Straßen ausgeschlossen werden.

Die Erfindung wird nachstehend anhand von bevorzugten Ausführungsbeispielen unter Bezugnahme auf die begleitenden Zeichnungen näher erläutert, in denen zeigt:

Fig. 1 die Bewegung eines Objekts auf einer digitalen Straßenkarte schematisch im Überblick;

Fig. 2 eine erste Ausführungsform des Verfahrens der Erfindung mittels vektorieller Inproduktbildung; und

Fig. 3 eine zweite Ausführungsform des Verfahrens der Erfindung mittels Koordinatentransformation.

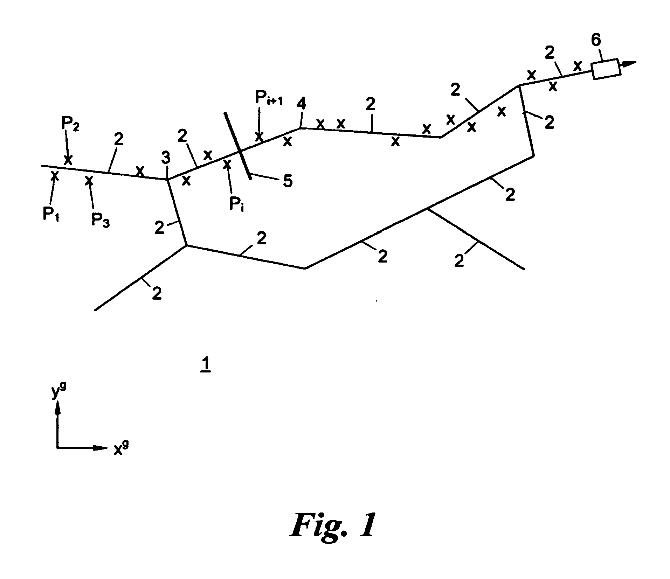

Fig. 1 zeigt ausschnittsweise eine digitale Straßenkarte 1 mit einer Vielzahl von Straßensegmenten 2, die ein Straßennetz bilden. Die Straßensegmente 2 sind vektorisiert, d.h. jeweils durch ihren Anfangs- und Endpunkt 3, 4 in einem globalen Koordinatensystem $x^g/y^g$ der Straßenkarte 1 definiert, wie in der Technik bekannt.

Zumindest eine virtuelle Grenze 5 wird von einem der Stra-βensegmente 2 gekreuzt. Die Grenze 5 kann auch am Anfangs- oder Endpunkt 3, 4 eines Straßensegments 2 liegen, d.h. an der Verbindungsstelle zweier oder mehrerer Straßensegmente 2; in diesem Fall kann sie als einem dieser Straßensegmente 2 zugeordnet betrachtet werden.

Die Grenze 5 kann als vektorisierte Strecke mit einem Anfangspunkt $T_1$ und einem Endpunkt $T_2$ definiert sein, woraus unmittelbar ihr Schnittpunkt $T_0$ mit dem querenden Straßensegment 2 bestimmt werden kann. Alternativ kann die Grenze 5 auch direkt als dieser Schnittpunkt $T_0$ definiert werden.

Die Bewegung eines Objektes 6, z.B. eines Fahrzeugs, das mittels einer GNSS-OBU fortlaufend position fixes im globalen Koordinatensystem $x^g/y^g$ bestimmt, ist auf der Straßenkarte 1 durch eine Folge von Positionen $P_1$, $P_2$, ..., allgemein $P_i$, repräsentiert. In dem in Fig. 1 gezeigten Beispiel befährt das Fahrzeug bzw. Objekt 6 den oben dargestellten Straßenzug, darunter auch das Straßensegment 2 mit der Grenze 5. Das Passieren der Grenze 5 durch das Objekt 6 wird durch Auswertung der Positionen $P_i$ wie folgt detektiert.

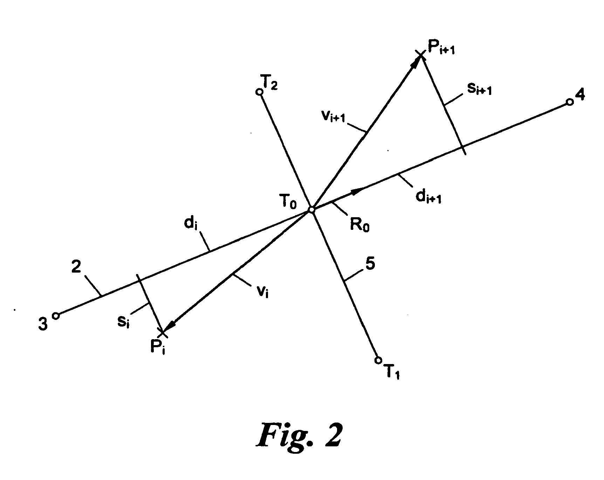

Fig. 2 zeigt zwei beispielhafte aufeinanderfolgende Positionen $P_i$, $P_{i+1}$, die unmittelbar vor und nach der Grenze 5 bestimmt wurden. Aufgrund von Ungenauigkeiten der Positionsbestimmung, z.B. GNSS-Ungenauigkeiten, liegen die Positionen $P_i$, $P_{i+1}$ in der Regel nicht genau auf dem Straßensegment 2 sondern in einem Normalabstand $S_i$ bzw. $S_{i+i}$ zu diesem.

Für jede Position $P_i$ der Folge von Positionen, hier beispielhaft $P_i$ und $P_{i+1}$, wird ein Vektor $V_i$ zwischen dieser Position und dem Schnittpunkt $T_0$ der Grenze 5 mit dem Straßensegment 2 berechnet. Die Vektoren $V_i$ werden anschließend - oder sofort nach ihrer Berechnung - jeweils auf das Straßensegment 2 projiziert, genauer auf eine Referenzrichtung $R_0$ des Straßensegments 2, so dass eine Folge von Projektionen $d_i$ erhalten wird. Die Referenzrichtung $R_0$ liegt in der Orientierung des Straßensegments 2 und hat bevorzugt - auch wenn es nicht zwingend ist - die Länge eins (Einheitsvektor).

In der in Fig. 2 gezeigten Ausführungsform werden die Projektionen $d_i$ durch Bilden jeweils eines vektoriellen Inprodukts zwischen den Vektoren $V_i$ und der Referenzrichtung $R_0$ gebildet, d.h.

$$d_1 = \overrightarrow{T_0 P_1} \cdot \overrightarrow{R_0} = \overrightarrow{v_1} \cdot \overrightarrow{R_0}$$

$$\vdots$$

$$d_i = \overrightarrow{T_0 P_i} \cdot \overrightarrow{R_0} = \overrightarrow{v_i} \cdot \overrightarrow{R_0}$$

$$d_{i+1} = \overrightarrow{T_0 P_{i+1}} \cdot \overrightarrow{R_0} = \overrightarrow{v_{i+1}} \cdot \overrightarrow{R_0}$$

$$\vdots$$

Wenn in der so erzeugten Folge von Projektionen (Inprodukten) $d_i$ ein Vorzeichenwechsel (Richtungswechsel) auftritt, dann wurde die Grenze 5 überschritten und ein Grenzübertritt wird detektiert.

Optional kann zusätzlich überprüft werden, ob die Beträge der beiden vor und nach dem Richtungs- bzw. Vorzeichenwechsel liegenden Projektionen $d_i$, $d_{i+i}$ ein vorgegebenes Minimum min überschreiten, d.h. $|d_i|$ > min und $|d_{i+1}|$ > min ist. Wenn ja, wird der zuvor detektierte Grenzübertritt akzeptiert ("validiert"). Dadurch können Fehldetektionen durch Positionsungenauigkeiten verhindert werden.

Als weitere Validierungsstufe können auch die Normalabstände $S_i$ der Positionen $P_i$ vom Straßensegment 2 ausgewertet werden. Dazu wird überprüft, ob die beiden Normalabstände $S_i$, $S_{i+1}$ vor und nach dem zuvor detektieren Richtungs- bzw. Vorzeichenwechsel kleiner sind als vorgegebene Maxima $max_1$, $max_2$, $max_3$, d. h. $|S_i|$ < $max_1$ und $|S_{i+1}|$ < $max_2$, wobei die Maxima $max_1$, und $max_2$ auch gleich sein können, und/oder $|S_i - S_{i+i}|$ < $max_3$. Mit dieser Überprüfung können Fehldetektionen z.B. bei der Befahrung von naheliegenden parallelen Straßensegmenten 2, diekeine Grenzen 5 haben, ausgeschlossen werden.

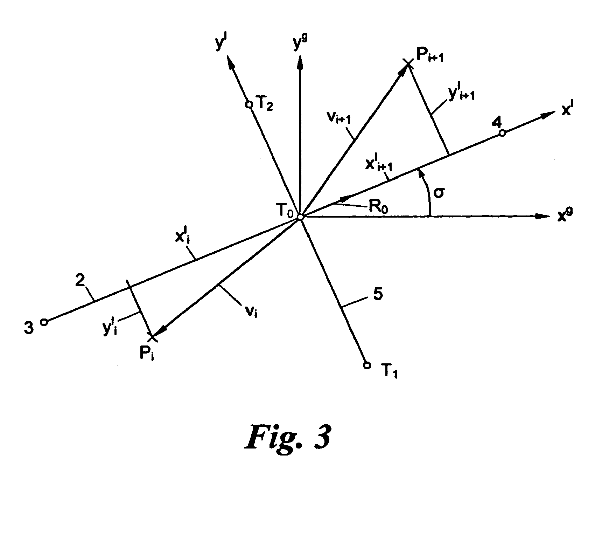

Fig. 3 zeigt eine alternative Ausführungsform zur Berechnung der Projektionen $d_i$ der Vektoren $V_i$. Hier wird aus der Referenzrichtung $R_0$ ein lokales Koordinatensystem $x^1/y^1$ mit der Referenzrichtung $R_0$ als x-Achse $x^1$ aufgestellt, und die im globalen Koordinatensystem $x^g/y^g$ berechneten Vektoren $V_i$ werden in das lokale Koordinatensystem $x^1/y^1$ transformiert, u.zw. durch Anwendung der Rotationsmatrix

$$R = \begin{bmatrix} \cos\sigma & -\sin\sigma \\ \sin\sigma & \cos\sigma \end{bmatrix}$$

mit $\sigma$ ... Winkel zwischen $x^1$ und $x^g$.

Die in das lokale Koordinatensystem $x^1/y^1$ transformierten Vektoren $V^1_i$ ergeben sich damit zu

$$\vec{v_i'} = R^{-1}\vec{v_i} = \begin{bmatrix} x_i' \\ y_i' \end{bmatrix}$$

$$\vec{v'_{i+1}} = R^{-1}\vec{v_{i+1}} = \begin{bmatrix} x_{i+1}' \\ y_{i+1}' \end{bmatrix}$$

Die x-Koordinaten $x^1_i$ und $x^1_{i+1}$, der transformierten Vektoren $V^1_i$, $V^1_{i+1}$ entsprechen wiederum den Projektionen $d_i$ und $d_{i+i}$. Ein Vorzeichenwechsel, wie er zwischen den Projektionen $x^1_i = d_i$ und $x^1_{i+1} = d_{i+1}$ auftritt, zeigt wieder den Grenzübertritt an.

Auch hier können die Projektionen $x^1_i$, $x^1_{i+1}$ in der oben genannten Weise zusätzlich auf Überschreiten des Minimums min überprüft werden, d.h. ob $|x^1_i| > min$ und $|x^1_{i+1}| > min$ ist.

Die y-Koordinaten $y^1_i$ und $y^1_{i+i}$ der transformierten Vektoren $V^1_i$, $V^1_{i+1}$ entsprechen den Normalabständen $S_i$, $S_{i+1}$ und können wieder auf Einhaltung der Maximalgrenzen $max_1$, $max_2$, $max_3$ überprüft werden, d. h. ob $|y^1_i| < max_1$ und $|y^1_{i+1}| < max_2$ ist und/oder $|y^1_i - y^1_{i+1}| < max_3$ ist.

Zusätzlich zu der geschilderten Auswertung der Positionen $P_i$ können weitere Messwerte der Positionsbestimmung wie Orientierung, Geschwindigkeiten, Pseudoranges usw. aus einer GNSS-Positionsbestimmung zur Verbesserung bzw. Validierung der Detektion des Übertritts der Grenze 5 herangezogen werden.

Das geschilderte Verfahren zur Detektion des Passierens von virtuellen Grenzen 5 kann sowohl dezentral in einer OBU als auch zentral in einem Mautberechnungsserver eines Straßenmautsystems verwendet werden.

Die Erfindung ist nicht auf die dargestellten Ausführungsformen beschränkt, sondern umfasst alle Varianten und Modifikationen, die in den Rahmen der angeschlossenen Ansprüche fallen.

### Patentansprüche

1. Verfahren zum Detektieren eines Grenzübertritts eines Objekts (6), dessen Bewegung durch eine Folge von Positionen ($P_i$) auf einer digitalen Straßenkarte (1) mit vektorisierten Straßensegmenten (2) und zumindest einer Grenze (5) repräsentiert wird, umfassend:

   Bestimmen eines Schnittpunkts ($T_0$) der Grenze (5) mit einem Straßensegment (2) und einer Referenzrichtung ($R_0$) in der Orientierung dieses Straßensegments (2), fortlaufendes Projizieren von Vektoren ($v_i$), die jeweils zwischen einer der Positionen ($P_i$) und

dem Schnittpunkt ($T_0$) bestimmt werden, auf die Referenzrichtung ($R_0$), um eine Folge von Projektionen ($d_i$, $d_{i+1}$; $x^1_i$, $x^1_{i+1}$) zu erhalten, und Detektieren eines Grenzübertritts, wenn in der Folge von Projektionen ($d_i$, $d_{i+1}$; $x^1_i$, $x^1_{i+1}$) ein Richtungs- oder Vorzeichenwechsel eintritt.

2. Verfahren nach Anspruch 1, **dadurch gekennzeichnet, dass** das Projizieren durch Bilden von vektoriellen Inprodukten ($d_i$, $d_{i+1}$) der Vektoren ($v_i$) mit der Referenzrichtung ($R_0$) erfolgt und ein Grenzübertritt bei einem Vorzeichenwechsel der Inprodukte detektiert wird.

3. Verfahren nach Anspruch 1, **dadurch gekennzeichnet, dass** das Projizieren durch Transformieren der Vektoren ($v^1_i$) in ein lokales Koordinatensystem ($x^1/y^1$) mit der Referenzrichtung ($R_0$) als x-Achse ($x^1$) erfolgt und ein Grenzübertritt bei einem Vorzeichenwechsel ihrer x-Koordinaten ($x^1_i$, $x^1_{i+1}$) detektiert wird.

4. Verfahren nach einem der Ansprüche 1 bis 3, **gekennzeichnet durch** den weiteren Schritt des Validierens des Grenzübertritts, wenn die Beträge der beiden vor und nach dem Richtungs- bzw. Vorzeichenwechsel liegenden Projektionen ($d_i$, $d_{i+1}$; $x^1_i$, $x^1_{i+1}$) ein vorgegebenes Minimum (min) überschreiten.

5. Verfahren nach einem der Ansprüche 1 bis 3, **gekennzeichnet durch** den weiteren Schritt des Validierens des Grenzübertritts, wenn die Normalabstände ($s_i$, $s_{i+1}$; $y^1_i$, $y^1_{i+1}$) der beiden vor und nach dem Richtungs- bzw. Vorzeichenwechsel liegenden Positionen ($P_i$, $P_{i+1}$) zur Referenzrichtung ($R_0$) ein vorgegebenes Maximum ($max_1$, $max_2$, $max_3$) nicht überschreiten.

### Claims

1. A method for detecting a boundary crossing of an object (6), whose movement is represented by a sequence of positions ($P_i$) on a digital road map (1) with vectorized road segments (2) and at least one boundary (5), the method comprising:

   determining an intersection (To) of the boundary (5) with a road segment (2) and a reference direction ($R_0$) in the orientation of this road segment (2), successively projecting vectors ($v_i$), each determined between one of the positions ($P_i$) and the intersection point (To), onto the reference direction ($R_0$), in order to obtain a sequence of projections ($d_i$, $d_{i+1}$; $x^1_i$, $x^1_{i+1}$), and detecting a boundary crossing if a change of direction or sign occurs in the sequence of projections ($d_i$, $d_{i+1}$; $x^1_i$, $x^1_{i+1}$).

2. The method according to claim 1, **characterized in that** the projecting is done by forming vectorial inner products ($d_i$, $d_{i+1}$) of the vectors ($v_i$) with the reference direction ($R_0$), and a boundary crossing is detected by a change of sign of the inner products.

3. The method according to claim 1, **characterized in that** the projecting is done by transforming the vectors ($v^1_i$) into a local coordinate system ($x^1/y^1$) with the reference direction ($R_0$) as x-axis ($x^1$), and a boundary crossing is detected by a change of sign of their x-coordinates ($x^1_i$, $x^1_{i+1}$).

4. The method according to any one of the claims 1 to 3, **characterized by** the additional step of validating the boundary crossing if the absolute values of the two projections ($d_i$, $d_{i+1}$; $x^1_i$, $x^1_{i+1}$) lying before and after the change of direction or sign exceed a predetermined minimum (min).

5. The method according to any one of the claims 1 to 3, **characterized by** the additional step of validating the boundary crossing if the normal distances ($s_i$, $s_{i+1}$; $y^1_i$, $y^1_{i+1}$) of the two positions ($P_i$, $P_{i+1}$) lying before and after the change of direction or sign from the reference direction ($R_0$) do not exceed a predetermined maximum ($max_1$, $max_2$, $max_3$).

## Revendications

1. Procédé pour détecter un dépassement de frontière d'un objet (6), dont le déplacement est représenté par une succession de positions ($P_i$) sur une carte routière numérique (1) avec des segments de route vectorisés (2) et au moins une frontière (5), comprenant les étapes consistant à :

déterminer un point d'intersection ($T_o$) de la frontière (5) avec un segment de route (2) et une direction de référence ($R_o$) dans l'orientation de ce segment de route (2),
projeter successivement des vecteurs ($v_i$), qui sont définis respectivement entre l'une des positions ($P_i$) et le point d'intersection ($T_o$), sur la direction de référence ($R_o$), afin d'obtenir une succession de projections ($d_i$, $d_{i+1}$ ; $x^1_i$, $X^1_{i+1}$), et détecter un dépassement de frontière quand un changement de direction ou un changement de signe se produit dans la succession de projections ($d_i$, $d_{i+1}$ ; $x^1_i$, $x^1_{i+1}$).

2. Procédé selon la revendication 1, **caractérisé en ce que** la projection a lieu par formation de produits scalaires vectoriels ($d_i$, $d_{i+1}$) des vecteurs ($v_i$) avec la direction de référence ($R_o$), et un dépassement de frontière est détecté par un changement de signe des produits scalaires.

3. Procédé selon la revendication 1, **caractérisé en ce que** la projection a lieu par transformation des vecteurs ($v^1_i$) dans un système de coordonnées local ($x^1/y^1$) avec la direction de référence ($R_o$) à titre d'axe x ($x^1$), et un dépassement de frontière est détecté lors d'un changement de signe de leurs coordonnées x ($x^1_i$, $x^1_{i+1}$).

4. Procédé selon l'une des revendications 1 à 3, **caractérisé par** une autre étape consistant à valider le dépassement de frontière quand les valeurs des deux projections ($d_i$, $d_{i+1}$ ; $x^1_i$, $x^1_{i+1}$) qui se trouvent devant et derrière le changement de direction ou de signe dépassent un minimum prédéterminé (min).

5. Procédé selon l'une des revendications 1 à 3, **caractérisé par** une autre étape consistant à valider le dépassement de frontière quand les écartements normaux ($s_i$, $s_{i+1}$ ; $y^1_i$, $y^1_{i+1}$) des deux positions ($P_i$, $P_{i+1}$) qui se trouvent avant et après le changement de direction ou de signe par rapport à la direction de référence ($R_o$) ne dépassent pas un maximum prédéterminé ($max_1$, $max_2$, $max_3$).

Fig. 1

**Fig. 2**

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1696208 A
- EP 1701322 A
- WO 9514909 A
- DE 10155501
- WO 2004025574 A
- DE 102005016814
- EP 0742890 A